# FASCICULE DE BREVET EUROPEEN

(11) **EP 2 469 915 B1**
(45) Date de publication et mention de la délivrance du brevet: **30.05.2018**
(21) Numéro de dépôt: 11194666.1
(22) Date de dépôt: 20.12.2011
(51) Int. Cl.: H04W 24/08, G01R 29/08, G01C 19/34

(54) **PROCÉDÉ ET DISPOSITIFS DE CARTOGRAPHIE DU NIVEAU DU CHAMP ÉLECTRIQUE**
VERFAHREN UND VORRICHTUNGEN ZUR KARTIERUNG DER ELEKTRISCHEN FELDSTÄRKE
METHOD AND APPARATUSES FOR ELECTRIC FIELD STRENGTH MAPPING

(30) Priorité: 21.12.2010 FR 1005000
(43) Date de publication de la demande: 27.06.2012
(73) Titulaire: Thales, 92200 Neuilly Sur Seine (FR)
(72) Inventeur: Lebourg, Thierry, 49309 CHOLET CEDEX (FR); Guillaume, Philippe, 92704 COLOMBES Cedex (FR)
(74) Mandataire: Lavoix

(56) Documents cités:
- DE-A1- 19 920 587
- GB-A- 2 423 217
- US-A1- 2009 315 995
- SOFTWRIGHT LLC: "Field Intensity Units", INTERNET CITATION, 1 janvier 1999 (1999-01-01), pages 1-6, XP007919290, Extrait de l'Internet: URL:http://www.softwright.com/faq/engineer ing/FIELD%20INTENSITY%20UNITS.html [extrait le 2011-08-29]

## Description

L'invention a pour domaine celui des procédés de cartographie du niveau du champ électrique et des dispositifs associés.

Les réglementations en vigueur (par exemple la Directive européenne N° 2004/40/CE du 29 avril 2004 ou le Décret français N° 2002-775 du 3 mai 2002) contraignent les organismes d'état chargés de réguler l'utilisation du spectre en fréquence des ondes électromagnétiques, à vérifier que les niveaux du champ électrique dans différentes bandes de fréquences du spectre sont conformes à des niveaux prédéfinis, et ceci en tout lieu du territoire et à tout instant.

Cette vérification de l'utilisation du spectre est actuellement réalisée au moyen de stations dédiées, fixes ou mobiles. Une station fixe comporte au moins une sonde du champ électrique permettant de réaliser des mesures du niveau du champ électrique dans une bande de fréquence caractéristique de cette sonde. Ces mesures locales et instantanées sont précises et peuvent être répétées. Mais, les stations fixes étant implantées en un lieu défini, elles ne permettent pas un contrôle du niveau du champ électrique en tout point du territoire. Ainsi, par exemple en France, l'organisme de gestion du spectre - l'agence nationale des fréquences (AFNR) - possède moins d'une douzaine de stations fixes.

Une station mobile comporte également au moins une sonde similaire à celle présentée ci-dessus. Une station mobile présente l'avantage de pouvoir être déplacée d'un lieu à l'autre du territoire pour effectuer des mesures locales du niveau du champ. Mais, le faible nombre de stations mobiles fait qu'il existe un intervalle de temps trop important entre deux vérifications réalisées en un même lieu. Il a par exemple été constaté qu'en certains lieux, aucune mesure du niveau du champ électrique n'a été renouvelée depuis plusieurs années, alors qu'entre-temps de nombreuses autorisations d'émission ont été accordées.

Pour garantir le respect des réglementations en tout point du territoire et à tout instant, les organismes de régulation devraient s'équiper d'un grand nombre de stations. Mais ceci n'est pas possible à cause du trop grand investissement que cela représenterait et des coûts d'exploitation trop importants.

Ainsi, jusqu'à présent, les organismes de régulation ne peuvent matériellement pas réaliser une vérification des niveaux des champs électriques sur l'ensemble du territoire et à tout instant, ni suivre l'évolution de ces niveaux au cours du temps.

Le document GB 2 423 217 décrit un procédé de cartographie de la couverture géographique d'une infrastructure de téléphonie cellulaire, en utilisant un terminal mobile d'un abonné pour effectuer une mesure de la qualité de la liaison courante établie avec une station de base de l'infrastructure. Les mesures de la qualité utilisées sont par exemple la force de signal (e.g. SNR) et les "bit error rates". L'invention a donc pour but de pallier aux problèmes précités.

Pour cela l'invention a pour objet un procédé de cartographie du niveau du champ électrique, utilisant une pluralité de terminaux nomades, une structure de communication et une plateforme, chaque terminal comportant :
- un moyen de réception d'ondes électromagnétiques connecté à une antenne, fonctionnant à une fréquence radioélectrique de fonctionnement se situant dans une bande de fréquences allouée, et propre à délivrer une mesure relative du niveau du champ électrique reçu à la fréquence de fonctionnement ;
- un moyen de communication propre à permettre la communication vers la plateforme, via la structure de communication ; et,
- un moyen de positionnement géographique,
et comportant, au niveau de chaque terminal, les étapes:
a)- d'acquisition, en sortie du moyen de réception, de la mesure relative du niveau du champ, et, sensiblement simultanément, en sortie du moyen de positionnement géographique, d'une mesure de position ;
b)- d'élaboration d'un message comportant la fréquence radioélectrique de fonctionnement à laquelle la mesure de puissance a été effectuée, la mesure relative du niveau du champ électrique, et la mesure de position; et,
c)- de transmission, vers la plateforme, via la structure de communication, du message élaboré,
et, au niveau de la plateforme, une étape d'agrégation des mesures de niveau du champ électrique provenant des différents terminaux, sous la forme d'une cartographie.

Suivant des modes particuliers de réalisation, le procédé comporte une ou plusieurs des caractéristiques suivantes prises isolément ou suivant toutes les combinaisons techniquement possibles :
- ledit moyen de réception est propre à mesurer, en sortie de son antenne, une puissance relative des signaux reçus à la fréquence de fonctionnement, et le procédé comporte, pour chaque mesure de puissance relative acquise en sortie du moyen de réception à l'étape d'acquisition, une étape de calcul, d'une mesure du niveau du champ électrique des signaux incidents sur l'antenne du moyen de réception considéré, à partir de la mesure de puissance relative,
- l'étape de calcul est réalisée sur le terminal,
- lesdits terminaux nomades sont des téléphones portables, et l'infrastructure de communication comporte une infrastructure de radiocommunication cellulaire,
- le moyen de réception fait partie intégrante des moyens de communication du terminal nomade, pour la communication du terminal vers la plateforme, via l'infrastructure de communication,
- le moyen de réception est propre à fonctionner à une fréquence de fonctionnement ajustable, par le terminal, à l'intérieur d'une bande de fréquences allouée, et le procédé comporte une étape de réglage de la valeur de la fréquence de fonctionnement du moyen de réception avant l'étape d'acquisition,
- le moyen de réception est un module d'émission / réception respectant une norme choisie parmi les normes GSM, GPRS, UMTS, LTE, Wi-Fi, WiMax, Bluetooth ou l'équivalent,
- le terminal nomade comporte un moyen d'orientation propre à délivrer une mesure de l'angle de gisement du terminal et/ou une mesure de l'angle de site du terminal, et l'étape d'acquisition consiste, en outre, à acquérir des mesures d'angle d'orientation en sortie du moyen d'orientation, sensiblement simultanément avec l'acquisition de la mesure de puissance, en tant que données de correction,
- le terminal nomade comporte un paramètre de type, et l'étape d'élaboration consiste, en outre, à lire la valeur du paramètre de type, et à élaborer un message comportant, en outre, la valeur du paramètre de type, en tant que donnée de correction,
- l'étape d'agrégation comporte une sous-étape de correction de la mesure de puissance contenu dans un message, en fonction de la ou des donnée(s) de correction contenue(s) dans ledit message.

L'invention a également pour objet un support d'enregistrement d'informations comportant les instructions pour l'exécution des étapes a) à c) du procédé précédent, lorsque ces instructions sont exécutées par un moyen de calcul d'un terminal nomade.

L'invention a également pour objet un terminal nomade, caractérisé en ce qu'il est propre à exécuter les étapes a) à c) du procédé précédent et comporte :
- un moyen de réception d'ondes électromagnétiques relié à une antenne, fonctionnant à une fréquence de fonctionnement se situant dans une bande de fréquences allouée, et propre à mesurer une puissance des signaux reçus à la fréquence de fonctionnement ;
- un moyen de communication propre à permettre la communication vers la plateforme, via une structure de communication ;
- un moyen de positionnement géographique,
- un moyen d'acquisition, en sortie du moyen de réception, d'une mesure de puissance, et, sensiblement simultanément, en sortie du moyen de positionnement géographique, d'une mesure de position ;
- un moyen d'élaboration d'un message comportant la fréquence de fonctionnement, la mesure de puissance et la mesure de position ; et,
- un moyen de transmission d'un message vers la plateforme, via la structure de communication.

D'autres caractéristiques et avantages de l'invention ressortiront plus clairement de la description détaillée qui va suivre, donnée à titre indicatif et nullement limitatif, et faite en se référant aux dessins annexés sur lesquels :
- la figure 1 est une représentation schématique du système dans lequel le procédé selon l'invention est mis en oeuvre;
- la figure 2 est une représentation schématique d'un des téléphones portables utilisés dans le système de la figure 1 ; et,
- la figure 3 est une représentation, sous forme de blocs, du procédé selon l'invention.

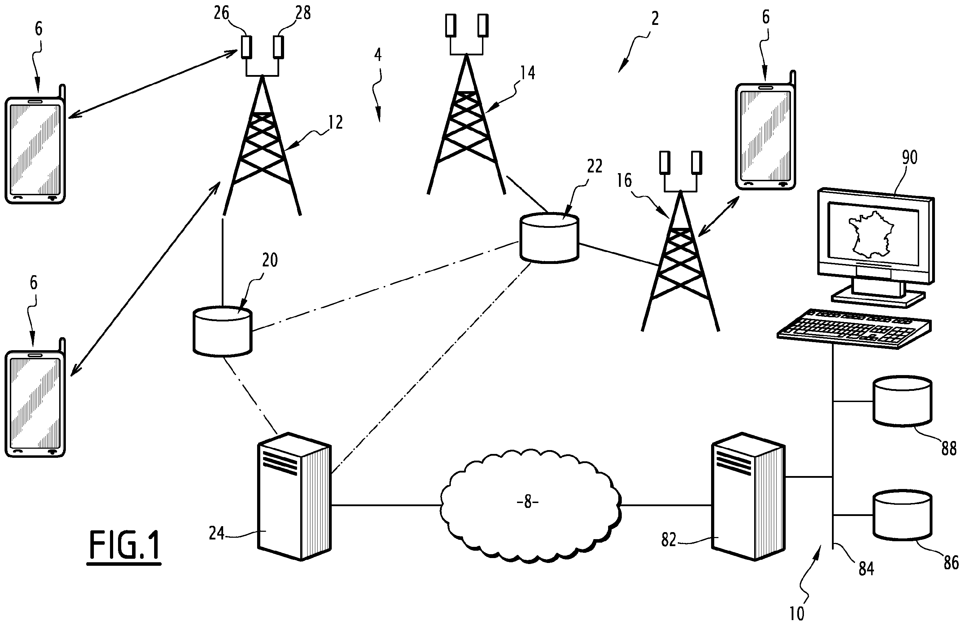

Le procédé de cartographie du niveau champ électrique selon l'invention est avantageusement mis en oeuvre par le système 2 représenté à la figure 1.

Le système 2 comporte une structure de communication. Celle-ci comporte un réseau de communications publiques, de préférence par paquets du type TCP/IP, tels que le réseau Internet 8.

La structure de communication comporte également une infrastructure 4 de radiocommunication cellulaire de téléphonie mobile, respectant, dans le mode de réalisation décrit ici en détails, la norme GSM (acronyme anglais de Global System for Mobile communications). En variante, l'infrastructure 4 respecte la norme UMTS (acronyme anglais de Universal Mobile Télécommunications System), ou la norme LTE (acronyme anglais de Long Term Evolution), ou toute autre norme de radiocommunication permettant un raccordement au réseau de communications publiques.

Le système 2 comporte une pluralité de téléphones mobiles 6 aptes à se connecter à l'infrastructure 4.

Enfin, le système 2 comporte une plateforme 10 connectée à l'Internet 8.

De manière connue en soi, l'infrastructure 4 comporte une pluralité de stations de base, référencées 12, 14 et 16 sur la figure 1, connectée à un réseau de communications représenté schématiquement sur la Figure 1 par les équipements de routage 20 et 22, et de passerelle 24, ce dernier permettant de relier l'infrastructure 4 à l'Internet 8.

Comme représenté schématiquement sur la station de base 12, chaque station de base comporte des premier et second moyens d'émission / réception d'ondes radioélectriques, référencés respectivement 26 et 28. Chaque moyen d'émission / réception d'une station de base est reliée à une antenne disposée verticalement. Chaque moyen d'émission / réception est apte à fonctionner selon la norme GSM, dans une bande de fréquences qui lui est propre. Une première bande de fréquences, par exemple entre 890 et 915 MHz, est ainsi allouée au premier moyen d'émission / réception 26 et une seconde bande de fréquences, par exemple entre 1710 et 1785 MHz, est allouée au second moyen d'émission / réception 28.

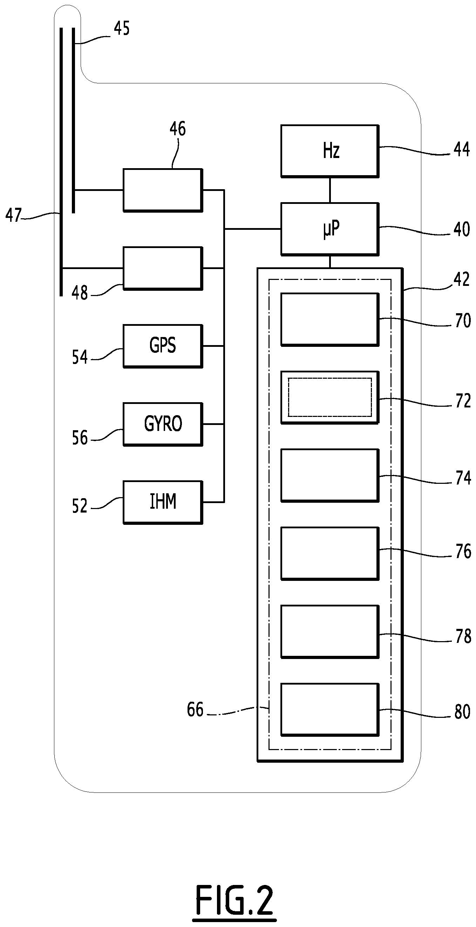

De manière connue en soi, comme représenté à la figure 2, un téléphone mobile 6 comporte un moyen de calcul, telle qu'un microprocesseur 40, un moyen de mémorisation, tel qu'une mémoire 42, et une d'horloge 44.

Un téléphone mobile 6 apte à communiquer avec l'infrastructure 4 qui comporte des premier et second moyens d'émission / réception est du type bi bandes. Il comporte des premier et second moyens d'émission / réception d'ondes radioélectriques 46 et 48, dénommés premier et second modules radio dans ce qui suit. Chaque module est relié à une antenne qui lui est propre.

Chaque module radio est propre à fonctionner selon la norme GSM et à communiquer avec un moyen d'émission / réception associé d'une station de base. Ainsi, le premier module radio 46, respectivement le second module radio 48, est propre à établir une connexion radioélectrique avec le premier moyen d'émission / réception 26, respectivement le second moyen 28, d'une station de base de l'infrastructure 4, la connexion s'effectuant à une fréquence de fonctionnement comprise dans la première bande de fréquences, respectivement dans la seconde bande de fréquences.

Conformément à la norme GSM, dans une bande de fréquences donnée, les échanges entre le téléphone mobile et la station de base comportent deux modes. Dans un premier mode, le module radio cherche à enregistrer le téléphone auprès du moyen d'émission / réception d'une station de base, puis, une fois enregistré, dialogue en permanence avec cette station de base de manière à maintenir la connexion. Le moyen d'émission / réception de cette station de base attribue au module radio du téléphone un canal de fréquences à l'intérieur de la bande de fréquences considérée. Ainsi, dans ce premier mode de fonctionnement, le moyen d'émission / réception de la station de base impose un canal, c'est-à-dire une fréquence de fonctionnement, au module radio du téléphone.

Dans un second mode de fonctionnement, la connexion qui a été établie dans le premier mode entre le module radio du téléphone et un moyen d'émission / réception d'une station de base est utilisée comme support d'une communication pour l'échange de données, par exemple de voix, entre le téléphone et la station de base.

A ces deux modes actifs, il faut ajouter un mode « en veille » dans lequel le module radio n'est pas utilisé, le téléphone n'étant pas enregistré auprès d'une station de base. Le module radio peut être « réveillé » par la réception d'une commande émise par le moyen de calcul du téléphone. Il bascule alors dans le premier mode de fonctionnement pour chercher à s'identifier auprès d'une station de base de son environnement.

Un module radio, tel que le module 46 ou le module 48, comporte une interface permettant l'échange de données avec le microprocesseur 40, selon un protocole connu défini dans la norme GSM (tel que les commandes AT - abréviation de « Attention »). Sur requête, cette interface est propre à délivrer le numéro du canal courant attribué au module radio ainsi qu'une mesure de la puissance des ondes électromagnétiques captées par le module radio à cette fréquence de fonctionnement.

Cette mesure de puissance est dite « pied d'antenne » car elle est mesurée par le module radio en sortie de l'antenne à laquelle il est relié. L'unité de mesure de cette puissance relative est le « dBm » (1 milli-Watt sur une charge de 50 ohms correspondant à 0 dBm).

Pour déterminer le niveau du champ, exprimé en dBµV/m, c'est-à-dire l'amplitude moyenne du champ électrique incident sur l'antenne à la fréquence de fonctionnement du module, on utilisera, comme cela sera décrit ci-dessous, un paramètre de calibration caractéristique de la fonction de transfert de l'antenne.

Un téléphone 6 comporte également des moyens d'interface 52, tels qu'un écran, un clavier, un microphone, une sortie écouteur, etc.

Un téléphone 6 comporte un moyen de positionnement 54 du type GPS (acronyme anglais de Global Positioning System) fonctionnant sur le principe de l'acquisition de plusieurs signaux de référence émis par des satellites différents, puis la détermination, à partir de ces signaux, de la position géographique instantanée du téléphone 6. La valeur instantanée de la position du téléphone est délivrée en sortie du moyen de positionnement 54.

Enfin, un téléphone 6 comporte un moyen d'orientation 56. Le moyen 56 comporte par exemple des capteurs gyroscopiques et un microcontrôleur propres à délivrer, sur une sortie du moyen 56, la valeur instantanée de l'orientation du téléphone. Cette orientation se caractérise par un angle de gisement, par rapport à une direction horizontale de référence (par exemple la direction du Nord magnétique), et un angle de site, par rapport à la verticale géographique.

La valeur instantanée de l'orientation du téléphone 6 permet de déduire celle des antennes 45 et 47 du téléphone pour corriger la mesure du niveau du champ effectué par le téléphone en tenant compte de l'orientation relative de l'antenne du module radio du téléphone par rapport à l'antenne du moyen d'émission / réception de la station de base dans la mesure du niveau du champ. En effet, le niveau du champ électrique détecté par le téléphone varie en fonction de l'orientation de son antenne par rapport aux sources du champ électrique que sont les antennes des stations de bases de l'infrastructure 4.

Pour la mise en oeuvre du procédé qui sera décrit ci-dessous, un téléphone 6 comporte différents moyens spécifiques. De préférence, ces moyens spécifiques sont de nature logiciel et résultent de l'exécution, par le microprocesseur 40, des instructions d'un logiciel applicatif 66 stocké dans la mémoire 42 du téléphone portable 6. Sur la figure 2, ces moyens spécifiques ont été représentés par des blocs additionnels à l'intérieur du bloc représentant le logiciel 66, dans la mémoire 42.

Ainsi, un téléphone portable 6 comporte un moyen de sélection 70 propre à sélectionner l'un des modules radio équipant le téléphone 6. Le moyen de sélection 70 peut prendre en compte certains critères pour effectuer cette sélection, tels que par exemple le mode de fonctionnement courant dans lequel se trouve tel ou tel module radio, l'intervalle de temps séparant la dernière utilisation d'un module radio pour vérifier le niveau du champ, ou encore une requête explicite de l'utilisateur au travers de l'interface 52.

Le téléphone 6 comporte un moyen d'acquisition 74 propre à acquérir, en sortie du module radio sélectionné, une mesure de puissance relative, et la valeur courante de la fréquence de fonctionnement du module radio au moment de la mesure. Cette valeur courante de la fréquence de fonctionnement est en fait le numéro du canal courant attribué au module radio.

Le moyen d'acquisition 74 est également capable d'acquérir, sensiblement simultanément aux mesures précédentes, une mesure de position délivrée par le moyen de positionnement 54, une mesure d'orientation délivrée par le moyen d'orientation 56 et une mesure de date délivrée par l'horloge 44.

Le téléphone 6 comporte un moyen de calcul 76 propre à déterminer une valeur du niveau du champ électrique, à partir de la mesure de puissance relative obtenue en sortie du moyen d'acquisition 74.

Pour cela, le moyen de calcul utilise un paramètre de calibration, caractéristique du module radio utilisé pour la mesure de puissance. Ce paramètre de calibration est une fonction des angles d'orientation du téléphone.

Le niveau du champ électrique est obtenu par addition de la mesure de puissance relative et de la valeur du paramètre de calibration déterminée à partir des mesures des angles d'orientation.

Le téléphone 6 comporte un moyen d'élaboration 78 propre à générer des messages de données en respectant un format prédéterminé en vue de transférer ces données vers la plateforme 10. Un message comporte les données suivantes :
- un paramètre « type de téléphone » dont la valeur, stockée dans la mémoire 42, est lue par le moyen 78 ;
- la valeur du niveau du champ électrique, obtenue en sortie du moyen de calcul 76 ;
- le numéro du canal courant attribué au module radio;
- la mesure de date ; et,
- la mesure de position.

Le moyen d'élaboration 78 est propre à stocker les messages ainsi élaborés dans la mémoire 42 dans l'attente de leur transmission.

Enfin, le téléphone 6 comporte un moyen de transmission 80 propre à transmettre les messages présents dans la mémoire 42. Le moyen 80 est propre à détecter qu'un des modules radio du téléphone est dans le premier mode de fonctionnement. Le moyen 80 est alors propre à transférer les messages lus dans la mémoire 42, vers ce module radio afin que celui-ci bascule dans le second mode de fonctionnement pour transmettre les messages vers l'infrastructure.

Les messages transmis sont routés, via la structure de communication, jusqu'à la plateforme 10.

La plateforme 10 est constituée d'un ordinateur serveur 82, connecté à l'Internet 8. Sur requête, ce serveur est apte à transmettre un fichier correspondant au logiciel 66 vers un téléphone mobile 6.

Par ailleurs, le serveur 82 est connecté, via un réseau local 84, à une première base de données 86 et à une seconde base de données 88. La première base de données 86 stocke les messages de données transmis par les différents téléphones portables 6. La seconde base de données 88 stocke des paramètres associés à chaque type de téléphone. Un tel paramètre est par exemple la sensibilité d'un module radio équipant un type particulier de téléphone.

Enfin, la plateforme 10 comporte plusieurs stations de travail 90. Une station de travail 90 est propre à accéder, via le réseau local 84, aux données stockées dans les première et seconde bases de données, à corriger les mesures de niveau du champ électrique réalisées par les téléphones, à extrapoler une mesure effectuée à une fréquence particulière sur l'ensemble de la bande de fréquence allouée au moyen d'émission / réception d'une station de base, et à générer une cartographie du niveau du champ électrique. De préférence, cette cartographie représente le niveau du champ électrique dans un intervalle de fréquences d'intérêt pour un opérateur.

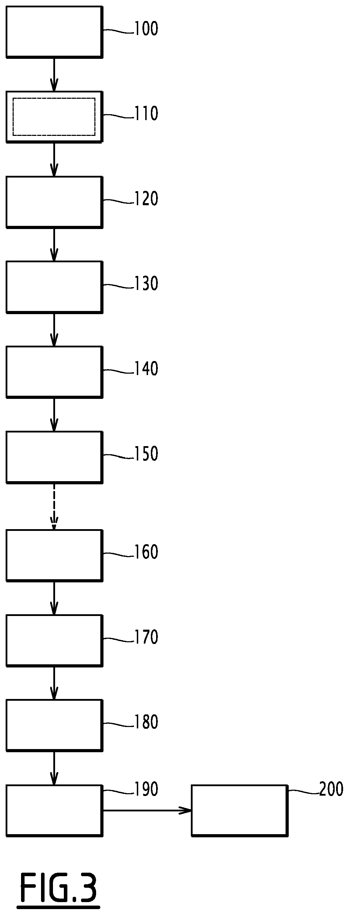

Le procédé selon l'invention va maintenant être décrit en relation avec la figure 3.

Dans une première phase, l'utilisateur d'un téléphone portable 6 qui souhaite participer à la campagne de cartographie du niveau du champ électrique, se connecte, via l'infrastructure 4 et l'Internet 8, au serveur 82 et télécharge un fichier (« plug in » en anglais) correspondant au logiciel applicatif 66.

Le logiciel 66 est ensuite installé sur le téléphone 6 et configuré de sorte que le moyen de calcul 76 utilise un premier, respectivement un second, paramètre de calibration, adapté au premier, respectivement au second, moyen d'émission / réception 46, respectivement 48, équipant le téléphone 6.

Le logiciel 66 est exécuté périodiquement. Il réalise alors les étapes suivantes du procédé permettant d'utiliser le téléphone 6 en tant que moyen de mesure du niveau du champ électrique environnant le téléphone.

A l'étape 100, le moyen de sélection 70 est exécuté. Il sélectionne l'un des modules radio équipant le téléphone 6 pour effectuer une mesure du niveau du champ dans la bande de fréquences allouée au moyen d'émission / réception de l'infrastructure auxquels le module radio sélectionné est capable de se connecter.

Pour effectuer cette sélection, le moyen 70 lit une liste comportant une colonne mentionnant les identifiants des différents modules radio équipant le téléphone 6, et vérifie le mode de fonctionnement courant de chacun de ces modules radio.

Parmi les modules radio qui sont en mode « veille », le moyen 70 détermine celui dont la date de la dernière utilisation en tant que moyen de mesure du niveau du champ électrique est la plus ancienne. Cette date est maintenue à jour par le moyen 70 dans une colonne de la liste précitée.

Dans ce qui suit, le second module 48 est sélectionné pour effectuer une mesure du niveau du champ dans la seconde bande de fréquences allouée aux seconds moyens d'émission / réception des stations de base de l'infrastructure 4.

L'exécution du logiciel 66 génère alors une requête à destination du second module 48 de manière à le basculer du mode « veille », vers le premier mode de fonctionnement.

Dans le premier mode de fonctionnement, le second module 48 s'enregistre auprès du second moyen d'émission / réception d'une station de base de son environnement.

Puis, le second module radio 48 étant parvenu à s'enregistrer auprès d'une station de base, sa fréquence de fonctionnement lui est imposée. Un canal de fréquence lui est attribué. Il mesure alors la puissance relative des signaux électromagnétiques incidents ayant une fréquence à l'intérieur de ce canal courant.

Dans une étape 120, le logiciel 66 lance l'exécution du moyen d'acquisition 74 pour acquérir, sensiblement simultanément :
- la mesure instantanée de la puissance relative, obtenue en sortie du second module radio 48,
- le numéro du canal attribué;
- une mesure de date, obtenue en sortie de l'horloge;
- une mesure instantanée de la position géographique, obtenue en sortie du moyen de positionnement ; et,
- les mesures instantanées des angles d'orientation, obtenues en sortie du moyen d'orientation.

A l'étape 130, le logiciel 66 exécute le moyen de calcul 76 pour déterminer la valeur du niveau du champ, à partir des mesures de puissance relative et d'angles d'orientation. Pour ce faire le moyen de calcul 76 utilise le paramètre de calibration associé au second module radio

A l'étape 140, le logiciel 66 exécute le moyen d'élaboration de message 78 pour composer un message de données propre à être transmis vers la plateforme 10. Comme indiqué précédemment, ce message comporte, en plus de la valeur du niveau du champ calculée à l'étape 130, les données correspondant au paramètre « type de téléphone », au numéro du canal attribué, à la mesure de date, et à la mesure de position géographique.

Le message ainsi élaboré est placé dans la mémoire 42.

Enfin, l'étape 150 correspond à la transmission des messages présents dans la mémoire 42 vers la plateforme 10 via l'infrastructure de communication. A partir du moment où un message de données est placé dans la mémoire 42, le moyen de transmission 80 est périodiquement exécuté pour tenter de transmettre les messages. Le moyen 80 détecte si l'un des modules radio du téléphone 6 a établi une connexion avec l'infrastructure de communication 4. Par exemple, dans le cas présent, le moyen 80 détecte que le premier moyen d'émission / réception 46 du téléphone est connecté à l'infrastructure 4 mais n'est pas utilisé en communication de données : il se trouve dans le premier mode de fonctionnement. Le moyen 80 émet une instruction adaptée pour que le premier module radio bascule dans le second mode de fonctionnement et lui transfère les messages lus depuis la mémoire 42.

Le premier moyen d'émission / réception 46 transmet alors les messages sur la connexion établie avec l'infrastructure 4.

Les messages de données émis depuis le téléphone 6, sont reçus par l'infrastructure 4, routés vers la passerelle 24, puis, à travers l'Internet 8, pour être finalement acheminés jusqu'au serveur 82 de la plateforme 10.

Au niveau de la plateforme 10, le procédé selon l'invention se poursuit par l'agrégation des différents messages venant des différents téléphones portables 6 du système 2.

A l'étape 160, le serveur 82 stocke, dans la première base de données 84, l'ensemble des messages qu'il reçoit.

A l'étape 170, un opérateur souhaitant élaborer une cartographie du champ électrique pour les fréquences de la seconde bande de fréquences allouée de la norme GSM, interroge la base de données 84 pour en extraire les messages comportant une mesure de puissance effectuée à une fréquence de fonctionnement comprise dans cette seconde bande.

Pour cela, la requête d'interrogation de la première base de données comporte les numéros des canaux composant la seconde bande de fréquences, ainsi qu'une plage temporelle d'intérêt.

A l'étape 180, la mesure du niveau du champ contenue dans un message extrait lors de l'étape 170 est corrigée. Par exemple, la mesure est corrigée en fonction de la sensibilité du téléphone ayant servi à effectuer cette mesure. La valeur de la sensibilité du téléphone est stockée dans la seconde base de données 88 en association avec le « type de téléphone ».

A l'étape 190, la mesure du niveau du champ, éventuellement corrigée, qui a été réalisée à une fréquence particulière, est extrapolée de manière à déterminer une mesure du niveau du champ électrique produit par une station de base sur l'ensemble de la seconde bande de fréquences. Soit l'on considère que les seconds moyens d'émission / réception des stations de base ont une puissance d'émission constante sur toute la seconde bande, soit l'on considère une fonction caractéristique d'émission / réception des seconds moyens d'émission / réception sur cette seconde bande.

Les traitement précédents permettent d'agréger, au sein d'une même cartographie fréquentielle, les différentes mesures qui ont été réalisées avec des matériels différents (c'est-à-dire des types différents de modules radio fonctionnant dans la seconde bande de fréquences), dans des conditions de mesure différentes (c'est-à-dire pour des orientations différentes des antennes), à des fréquences de mesure différentes (c'est-à-dire des canaux attribué différents).

Enfin à l'étape 200, une cartographie du niveau du champ électrique est générée. Un maillage est superposé à une carte du territoire et chaque mesure traitée est affichée à l'intérieur de la maille qui correspond à la position du téléphone au moment de la mesure ou à une moyenne entre plusieurs positions de mesure. Cet affichage à l'intérieur de la maille du niveau du champ électrique s'effectue sous la forme d'une échelle de couleurs.

De nombreuses variantes du système permettant la mise en oeuvre du procédé venant d'être décrit sont envisageables par l'homme du métier.

Ainsi, l'exécution du logiciel 66 et la sélection d'un module radio particulier peuvent être demandées par l'utilisateur au moyen de l'interface 52, ou par la plateforme 10. Dans ce dernier cas, constatant par exemple qu'une cartographie manque de précision dans une région géographique, la plateforme requiert que les stations de base situées dans cette région émettent un signal propre à déclencher l'exécution de ce logiciel, lorsqu'il sera reçu par un téléphone équipé du logiciel 66. De manière similaire, si la cartographie manque de précision dans une bande du spectre, le signal sera propre à sélectionner un module radio apte à effectuer des mesures dans cette bande du spectre.

En variante, après l'utilisation d'un module radio, le procédé est itéré en utilisant un autre des modules radio équipant le téléphone.

En variante, le module de sélection est propre à sélectionner également les modules radio se trouvant dans le premier mode de fonctionnement.

Le téléphone 6 décrit à la figure 2 est du type bi bandes et les deux moyens d'émission/réception GSM dont il est équipé ont été décrits. Mais, les téléphones mobiles récemment mis sur le marché sont équipés d'autres moyens d'émission / réception selon les normes GSM, GPRS, UMTS, LTE, Wi-Fi, WiMax, Bluetooth, etc. ou d'autres moyens fonctionnant uniquement en réception tel qu'un module de radio FM. Ces moyens d'émission / réception peuvent avantageusement être sélectionnés pour réaliser des mesures de niveau du champ électrique dans les bandes de fréquences qui sont caractéristiques de chacune de ces normes.

Dans le cas d'un module radio FM, le moyen de calcul peut régler la fréquence de fonctionnement de ce module. Dans ce cas, le logiciel 66 comporte un moyen de réglage 72 de la fréquence de fonctionnement propre à régler la valeur de la fréquence de fonctionnement courante du module radio FM sur n'importe quelle valeur à l'intérieur de la bande FM. Alors, à l'étape 110, le logiciel 66 exécute le moyen de réglage 72 pour ajuster la fréquence de fonctionnement du module radio FM. Le moyen 72 règle la valeur courante de la fréquence de fonctionnement à une première valeur f1, par exemple égale à la borne inférieure de 88 MHz de la bande FM qui s'étend entre 88 et 108 MHz. Cette valeur de la fréquence sera transmise dans le message, qui comportera par ailleurs la mesure du niveau du champ à cette fréquence.

Par ailleurs, bien que le terminal utilisateur mis à contribution pour la mesure du champ électrique soit de préférence un téléphone portable, d'autres terminaux nomades peuvent être utilisés pour mesurer le champ électrique. Un terminal nomade est un terminal informatique, déplaçable et pouvant se connecter, au moyen de liaisons sans fil, à un ou plusieurs dispositifs distants situé dans son environnement. Il peut par exemple s'agir d'un ordinateur portable, du type PC, équipés de moyens d'émission / réception du type Wi-Fi pour la connexion à une imprimante distante, ou encore d'une tablette numérique.

La plateforme a été décrite comme comportant un unique serveur permettant de fournir le logiciel et de recueillir les données de mesure. D'autres architectures de la plateforme sont envisageables, en particulier une architecture répartie dans laquelle chaque fonction est réalisée par un ou plusieurs ordinateurs dédiés à la réalisation de cette fonction.

Avantageusement, sur demande de l'utilisateur, l'application exécutée par le terminal nomade affiche sur l'écran de celui-ci, la mesure du niveau du champ électrique et/ou une estimation du DAS (acronyme de Débit d'Absorption Spécifique). De cette manière, l'utilisateur est informé, en temps réel, du niveau du champ électrique là où il se trouve.

En mettant à contribution les terminaux nomades des utilisateurs d'une infrastructure de communication, le procédé selon l'invention permet, simplement et à moindre coût, de réaliser, quasiment en temps réel, une cartographie, de préférence sur un intervalle de fréquence d'intérêt, du champ électrique, cette cartographie couvrant l'ensemble du territoire où se trouvent ces utilisateurs.

## Revendications

1. Procédé de cartographie du niveau du champ électrique, **caractérisé en ce qu'**il utilise une pluralité de terminaux nomades (6), une structure de communication (4, 8) et un ordinateur serveur (10) connecté, via l'internet, à la structure de communication, chaque terminal nomade comportant :
- un moyen de réception (48, 46) d'ondes électromagnétiques connecté à une antenne, fonctionnant à une fréquence radioélectrique de fonctionnement se situant dans une bande de fréquences allouée, et propre à délivrer une mesure de puissance du champ électrique incident sur l'antenne à la fréquence de fonctionnement ;
- un moyen de communication (46, 48) propre à permettre la communication vers la plateforme, via la structure de communication ; et,
- un moyen de positionnement géographique (54),
et **en ce que** le procédé comporte, au niveau de chaque terminal nomade, les étapes:
a)- d'acquisition (120), en sortie du moyen de réception, de la mesure de puissance du champ électrique, et, simultanément, en sortie du moyen de positionnement géographique, d'une mesure de position ; et de calcul (130) d'une mesure du niveau du champ électrique à partir de la mesure de puissance du champ électrique acquise ;
b)- d'élaboration (140) d'un message comportant la fréquence de fonctionnement à laquelle la mesure relative du niveau du champ électrique a été effectuée, la mesure du niveau du champ électrique calculée, et la mesure de position ; et,
c)- de transmission (150), vers l'ordinateur serveur, via la structure de communication, du message élaboré,
et, au niveau de l'ordinateur serveur, une étape d'agrégation (170, 180, 190) des mesures du niveau du champ électrique provenant des différents terminaux nomades, sous la forme d'une cartographie.

2. Procédé selon la revendication 1, **caractérisé en ce que** l'étape de calcul du niveau du champ électrique incident sur l'antenne à la fréquence de fonctionnement du moyen de réception utilise un paramètre de calibration caractéristique de la fonction de transfert de l'antenne.

3. Procédé selon la revendication 2, **caractérisé en ce que** l'étape de calcul (130) est réalisée par ledit terminal nomade.

4. Procédé selon l'une quelconque des revendications 1 à 3, **caractérisé en ce que** lesdits terminaux nomades sont des téléphones portables (6), et **en ce que** l'infrastructure de communication comporte une infrastructure de radiocommunication cellulaire (4).

5. Procédé selon l'une quelconque des revendications précédentes, **caractérisé en ce que** le moyen de réception (48, 46) fait partie intégrante des moyens de communication du terminal nomade, pour la communication du terminal nomade vers l'ordinateur serveur (10), via l'infrastructure de communication (4, 8).

6. Procédé selon l'une quelconque des revendications précédentes, **caractérisé en ce que** le moyen de réception est propre à fonctionner à une fréquence de fonctionnement ajustable, par le terminal nomade, à l'intérieur d'une bande de fréquences allouée, et **en ce que** le procédé comporte une étape de réglage (110) de la valeur de la fréquence de fonctionnement du moyen de réception avant l'étape d'acquisition (120).

7. Procédé selon l'une quelconque des revendications précédentes, **caractérisé en ce que** le moyen de réception est un module d'émission / réception respectant une norme choisie parmi les normes GSM, GPRS, UMTS, LTE, Wi-Fi, WiMax et Bluetooth.

8. Procédé selon l'une quelconque des revendications précédentes, **caractérisé en ce que** le terminal nomade (6) comporte un moyen d'orientation (56) propre à délivrer une mesure de l'angle de gisement du terminal et/ou une mesure de l'angle de site du terminal, et **en ce que** l'étape d'acquisition (140) consiste, en outre, à acquérir des mesures d'angle d'orientation en sortie du moyen d'orientation, sensiblement simultanément avec l'acquisition de la mesure de puissance, en tant que données de correction.

9. Procédé selon l'une quelconque des revendications précédentes, **caractérisé en ce que** le terminal nomade comporte un paramètre de type, et **en ce que** l'étape d'élaboration (140) consiste, en outre, à lire la valeur du paramètre de type, et à élaborer un message comportant, en outre, la valeur du paramètre de type, en tant que donnée de correction.

10. Procédé selon la revendication 8 ou la revendication 9, **caractérisé en ce que** l'étape d'agrégation comporte une sous-étape de correction (180) de la mesure de puissance du champ électrique contenue dans un message, en fonction de la ou des donnée(s) de correction contenue(s) dans ledit message.

11. Support d'enregistrement d'informations, **caractérisé en ce qu'**il comporte les instructions pour l'exécution des étapes a) à c) d'un procédé conforme à l'une quelconque des revendications 1 à 10, lorsque ces instructions sont exécutées par un moyen de calcul d'un terminal nomade.

12. Terminal nomade, **caractérisé en ce qu'**il est propre à exécuter les étapes a) à c) d'un procédé conforme à l'une quelconque des revendications 1 à 10, et comporte
- un moyen de réception (48, 46) d'ondes électromagnétiques relié à une antenne, fonctionnant à une fréquence de fonctionnement se situant dans une bande de fréquences allouée, et propre à délivrer une mesure de puissance du champ électrique incident sur l'antenne à la fréquence de fonctionnement ;
- un moyen de communication (46, 48) propre à permettre la communication vers un ordinateur serveur, via une structure de communication;
- un moyen de positionnement géographique (54),
- un moyen d'acquisition (74), en sortie du moyen de réception, de la mesure de puissance du champ électrique, et, simultanément, en sortie du moyen de positionnement géographique, d'une mesure de position ;
- un moyen de calcul propre à calculer une mesure du niveau du champ électrique à partir de la mesure de puissance du champ électrique délivrée par le moyen de réception ;
- un moyen d'élaboration (78) d'un message comportant la fréquence de fonctionnement à laquelle la mesure de puissance du champ électrique a été effectuée, la mesure de puissance et la mesure de position ; et,
- un moyen de transmission (80) du message vers l'ordinateur serveur, via la structure de communication.

## Patentansprüche

1. Kartographieverfahren für die elektrische Feldstärke, **dadurch gekennzeichnet, dass** es eine Mehrzahl von mobilen Endgeräten (6), eine Kommunikationsstruktur (4, 8) und einen Serverrechner (10) verwendet, der über das Internet mit der Kommunikationsstruktur verbunden ist, wobei jedes mobile Endgerät aufweist:
- ein Mittel zum Empfangen (48, 46) von elektromagnetischen Wellen, das mit einer Antenne verbunden ist, mit einer radioelektrischen Funktionsfrequenz funktioniert, die in einem zugewiesenen Frequenzband liegt, und in der Lage ist, eine Messung der Stärke des elektrischen Feldes auszugeben, das mit der Funktionsfrequenz an der Antenne ankommt,
- ein Kommunikationsmittel (46, 48), das in der Lage ist, die Kommunikation über die Kommunikationsstruktur in Richtung zu der Plattform zu ermöglichen, und
- ein Mittel zur geographischen Positionierung (54),
und dass das Verfahren bezüglich jedes mobilen Endgerätes die folgenden Schritte aufweist:
a) Erfassen (120), am Ausgang des Empfangsmittels, der Messung einer Stärke des elektrischen Feldes, und gleichzeitig, am Ausgang des Mittels zur geographischen Positionierung, einer Positionsmessung, und Berechnen (130) einer Messung der elektrischen Feldstärke ausgehend von der erfassten Messung der Stärke des elektrischen Feldes,
b) Erstellen (140) einer Nachricht, die aufweist: die Funktionsfrequenz, mit der die Messung bezüglich der elektrischen Feldstärke durchgeführt wurde, die berechnete Messung der elektrischen Feldstärke und die Positionsmessung, und
c) Übertragen (150) der erstellten Nachricht über die Kommunikationsstruktur in Richtung zu dem Serverrechner,
und, in Bezug auf den Serverrechner, einen Schritt der Aggregation (170, 180, 190) der Messungen der elektrischen Feldstärke aus den verschiedenen mobilen Endgeräten in Form einer Kartographie.

2. Verfahren gemäß Anspruch 1, **dadurch gekennzeichnet, dass** der Schritt des Berechnens der elektrischen Feldstärke, die mit der Funktionsfrequenz des Empfangsmittels an der Antenne ankommt, einen Kalibrierungsparameter verwendet, der für die Übertragungsfunktion der Antenne charakteristisch ist.

3. Verfahren gemäß Anspruch 2, **dadurch gekennzeichnet, dass** der Berechnungsschritt (130) mittels des mobilen Endgerätes durchgeführt wird.

4. Verfahren gemäß irgendeinem der Ansprüche 1 bis 3, **dadurch gekennzeichnet, dass** die mobilen Endgeräte Mobiltelefone (6) sind, und dass die Kommunikationsinfrastruktur eine zelluläre Radiokommunikationsinfrastruktur (4) aufweist.

5. Verfahren gemäß irgendeinem der vorhergehenden Ansprüche, **dadurch gekennzeichnet, dass** das Empfangsmittel (48, 46) integraler Bestandteil der Kommunikationsmittel des mobilen Endgerätes ist, für die Kommunikation des mobilen Endgerätes in Richtung zu dem Serverrechner (10) über die Kommunikationsinfrastruktur (4, 8).

6. Verfahren gemäß irgendeinem der vorhergehenden Ansprüche, **dadurch gekennzeichnet, dass** das Empfangsmittel in der Lage ist, mit einer durch das mobile Endgerät verstellbaren Funktionsfrequenz innerhalb eines zugewiesenen Frequenzbandes zu funktionieren, und dass das Verfahren einen Schritt des Regelns (110) des Wertes der Funktionsfrequenz des Empfangsmittels vor dem Schritt des Erfassens (120) aufweist.

7. Verfahren gemäß irgendeinem der vorhergehenden Ansprüche, **dadurch gekennzeichnet, dass** das Empfangsmittel ein Sende- / Empfangsmodul ist, das einen Standard erfüllt, der aus dem GSM-, GPRS-, UMTS-, LTE-, Wi-Fi-, WiMax- und Bluetooth-Standard ausgewählt wird.

8. Verfahren gemäß irgendeinem der vorhergehenden Ansprüche, **dadurch gekennzeichnet, dass** das mobile Endgerät (6) ein Orientierungsmittel (56) aufweist, das in der Lage ist, eine Messung des Peilwinkels des Endgerätes und/oder eine Messung des Standortwinkels des Endgerätes auszugeben, und dass der Schritt des Erfassens (140) ferner darin besteht, Orientierungswinkelmessungen am Ausgang des Orientierungsmittels im Wesentlichen gleichzeitig mit dem Erfassen der Messung der Stärke als Korrekturinformationen zu erfassen.

9. Verfahren gemäß irgendeinem der vorhergehenden Ansprüche, **dadurch gekennzeichnet, dass** das mobile Endgerät einen Typenparameter aufweist, und dass der Schritt des Erstellens (140) ferner darin besteht, den Wert des Typenparameters auszulesen und eine Nachricht zu erstellen, die ferner den Wert des Typenparameters als Korrekturinformation enthält.

10. Verfahren gemäß Anspruch 8 oder Anspruch 9, **dadurch gekennzeichnet, dass** der Aggregationsschritt einen Teilschritt des Korrigierens (180) der Messung der Stärke des elektrischen Feldes aufweist, die in einer Nachricht enthalten ist, in Abhängigkeit von der oder den Korrekturinformation(en), die in der Nachricht enthalten ist (sind).

11. Informationsspeichermedium, **dadurch gekennzeichnet, dass** es die Befehle zum Ausführen der Schritte a) bis c) eines Verfahrens gemäß irgendeinem der Ansprüche 1 bis 10 aufweist, wenn diese Befehle durch ein Rechenmittel eines mobilen Endgerätes durchgeführt werden.

12. Mobiles Endgerät, **dadurch gekennzeichnet, dass** es in der Lage ist, die Schritte a) bis c) eines Verfahrens gemäß irgendeinem der Ansprüche 1 bis 10 durchzuführen, und dass es aufweist:
- ein Mittel zum Empfangen (48, 46) von elektromagnetischen Wellen, das mit einer Antenne verbunden ist, mit einer Funktionsfrequenz funktioniert, die innerhalb eines zugewiesenen Frequenzbandes liegt, und in der Lage ist, eine Messung der Stärke des elektrischen Feldes auszugeben, das mit der Funktionsfrequenz an der Antenne ankommt,
- ein Kommunikationsmittel (46, 48), das in der Lage ist, die Kommunikation über eine Kommunikationsstruktur in Richtung zu einem Serverrechner zu ermöglichen,
- ein Mittel zur geographischen Positionierung (54),
- ein Mittel zum Erfassen (74), am Ausgang des Empfangsmittels, der Messung der Stärke des elektrischen Feldes, und gleichzeitig, am Ausgang des Mittels zur geographischen Positionierung, einer Positionsmessung,
- ein Rechenmittel, das in der Lage ist, eine Messung der elektrischen Feldstärke ausgehend von der Messung der Stärke des elektrischen Feldes zu berechnen, die von dem Empfangsmittel ausgegeben wird,
- ein Mittel zum Erstellen (78) einer Nachricht, aufweisend die Funktionsfrequenz, mit der die Messung der Stärke des elektrischen Feldes durchgeführt wurde, die Leistungsmessung und die Positionsmessung, und
- ein Mittel zum Übertragen (80) der Nachricht über die Kommunikationsstruktur in Richtung zu dem Serverrechner.

## Claims

1. Method for electric field strength mapping, **characterised in that** it uses a plurality of mobile terminals (6), a communication structure (4, 8) and a server computer (10) connected, *via* the internet, to the communication structure, each mobile terminal comprising:
- an electromagnetic wave receiving means (48, 46) connected to an antenna, which receiving means operates at a radioelectric operating frequency situated within an allocated frequency range and is capable of delivering a power measurement of the electric field incident on the antenna at the operating frequency;
- a communication means (46, 48) capable of permitting communication with the platform, *via* the communication structure; and
- a geographic positioning means (54),
and **in that** the method comprises, at each mobile terminal, the following steps:
a) acquisition (120), at the output of the receiving means, of the electric field power measurement and, simultaneously, at the output of the geographic positioning means, of a position measurement; and calculation (130) of an electric field strength measurement based on the acquired electric field power measurement;
b) preparation (140) of a message including the operating frequency at which the relative electric field strength measurement was made, the calculated electric field strength measurement, and the position measurement; and
c) transmission (150) of the prepared message to the server computer, *via* the communication structure,
and, at the server computer, a step of aggregation (170, 180, 190) of the electric field strength measurements coming from the various mobile terminals, in the form of a map.

2. Method according to claim 1, **characterised in that** the step of calculation of the strength of the electric field incident on the antenna at the operating frequency of the receiving means uses a calibration parameter characteristic of the transfer function of the antenna.

3. Method according to claim 2, **characterised in that** the calculation step (130) is carried out by said mobile terminal.

4. Method according to any one of claims 1 to 3, **characterised in that** said mobile terminals are mobile telephones (6), and **in that** the communication infrastructure comprises a cellular radiocommunication infrastructure (4).

5. Method according to any one of the preceding claims, **characterised in that** the receiving means (48, 46) forms an integral part of the communication means of the mobile terminal, for communication of the mobile terminal with the server computer (10) *via* the communication infrastructure (4, 8).

6. Method according to any one of the preceding claims, **characterised in that** the receiving means is capable of operating at an operating frequency which is adjustable, by the mobile terminal, within an allocated frequency range, and **in that** the method comprises a step of adjustment (110) of the value of the operating frequency of the receiving means prior to the acquisition step (120).

7. Method according to any one of the preceding claims, **characterised in that** the receiving means is a transmitting/receiving module which complies with a standard chosen from the GSM, GPRS, UMTS, LTE, Wi-Fi, WiMax and Bluetooth standards.

8. Method according to any one of the preceding claims, **characterised in that** the mobile terminal (6) comprises an orientation means (56) capable of delivering a measurement of the bearing angle of the terminal and/or a measurement of the elevation angle of the terminal, and **in that** the acquisition step (140) further consists in acquiring orientation angle measurements, at the output of the orientation means, substantially simultaneously with the acquisition of the power measurement, as correction data.

9. Method according to any one of the preceding claims, **characterised in that** the mobile terminal comprises a type parameter, and **in that** the preparation step (140) further consists in reading the value of the type parameter and in preparing a message which further includes the value of the type parameter, as correction datum.

10. Method according to claim 8 or claim 9, **characterised in that** the aggregation step comprises a sub-step of correction (180) of the electric field power measurement contained in a message, as a function of the correction datum/data contained in said message.

11. Information recording medium, **characterised in that** it comprises the instructions for executing steps a) to c) of a method according to any one of claims 1 to 10 when those instructions are executed by a computing means of a mobile terminal.

12. Mobile terminal, **characterised in that** it is capable of executing steps a) to c) of a method according to any one of claims 1 to 10 and comprises
- an electromagnetic wave receiving means (48, 46) connected to an antenna, which receiving means operates at an operating frequency situated within an allocated frequency range and is capable of delivering a power measurement of the electric field incident on the antenna at the operating frequency;
- a communication means (46, 48) capable of permitting communication with a server computer, *via* a communication structure;
- a geographic positioning means (54);
- an acquisition means (74) for acquiring, at the output of the receiving means, the electric field power measurement and, simultaneously, at the output of the geographic positioning means, a position measurement;
- a computing means capable of calculating an electric field strength measurement based on the electric field power measurement delivered by the receiving means;
- a preparation means (78) for preparing a message including the operating frequency at which the electric field power measurement was carried out, the power measurement and the position measurement; and
- a transmitting means (80) for transmitting the message to the server computer, *via* the communication structure.
